## Europäisches Patentamt
## European Patent Office
## Office européen des brevets

(19)

(11) Veröffentlichungsnummer: **0 003 337**
**B1**

(12) **EUROPÄISCHE PATENTSCHRIFT**

(21) Anmeldenummer: **79100164.7**

(22) Anmeldetag: **19.01.79**

(51) Int. Cl³: **C 08 L 67/06, C 09 D 3/68,
B 27 K 5/00, B 05 D 7/06**

(54) **Wässrige Polyesteremulsionen zur Herstellung offenporiger Beschichtungen**

(30) Priorität: **01.02.78 DE 2804216**

(43) Veröffentlichungstag der Anmeldung:
**08.08.79 Patentblatt 79/16**

(45) Bekanntmachung des Hinweises auf die Patenterteilung:
**23.07.80 Patentblatt 80/15**

(84) Benannte Vertragsstaaten:
**BE CH DE FR GB IT NL SE**

(56) Entgegenhaltungen:
**DE - A - 2 711 327
Chemical Abstracts, Vol. 80, no. 6, 11. Februar
1974, Seite 40 nr. 27978p
JP - B - 72 42384
Chemical Abstracts, Vol. 82, 1975 Seite 86 no.
32616q
JP - A - 74 58192**

(73) Patentinhaber: **Bayer AG
Zentralbereich Patente, Marken und Lizenzen
D - 5090 Leverkusen 1, Bayerwerk (DE)**

(72) Erfinder: **Frank, Walter, Ing.-grad.
Doerperhofstrasse 14
D - 4150 Krefeld 1 (DE)
Bendszus, Otto, Ing-grad.
Breitestrasse 92
D - 4150 Krefeld (DE)
Freier, Hans Joachim, Dr.
Campendonckstrasse 5
D - 4150 Krefeld (DE)
Traenckner, Hans-Joachim, Dr.
Wedelstrase 46
D - 4150 Krefeld (DE)**

Courier Press, Leamington Spa, England.

## Wäßrige Polyesteremulsionen zur Herstellung offenporiger Beschichtungen

Die vorliegende Erfindung betrifft wäßrige Emulsionen auf Basis ungesättigter Polyester zur Herstellung dünnschichtiger bzw. sogenannter offenporiger Beschichtungen auf Holz oder holzähnlichen Stoffen (z.B. auf Furniere imitierenden Folien).

Unter offenporiger Beschichtung versteht man eine dünnschichtige (meist matte) Lackierung, bei der sich der geschlossene Lackfilm der Porenstruktur und Maserung des Holzes eng anpaßt und die natürliche Eigenart der Holzoberfläche erhalten bleibt. Offenporige Beschichtungen verwendet man hauptsächlich zur Möbellackierung. Die gebräuchlichen Beschichtungsmittel sind Nitrocelluloselacke, deren nur physikalisch getrocknete Lackfilme allerdings keine Lösungsmittelbeständigkeit besitzen. Dieser Nachteil wird durch Beschichtungsmittel auf Basis ungesättigter Polyester vermieden.

Offenporige Beschichtungen können aus ungesättigten Polyesterharzen mit hohem Monomerengehalt bei stark thixotroper Einstellung des Lackes hergestellt werden (DE—A 2 623 960). Das in solchen Lacken als Monomeres fast ausschließlich verwendete Styrol copolymerisiert bei der Filmhärtung mit den ungesättigten Polyestern, so daß im Vergleich zur Nitrolackbeschichtung vernetzte, also unlösliche, Lackierungen mit hohem Gebrauchswert entstehen. Verdunstungsverluste an monomerem Styrol während der Verarbeitung, z.B. auf der Gießmaschine und zu Beginn der Filmhärtung, sind dabei jedoch unvermeidbar. Ihre Entfernung aus der Abluft der Fabrikationshallen und Trockenanlagen ist wegen der enormen umzuwälzenden Luftmengen sehr kostspielig.

Ein besonderer Aspekt der Beschichtung mit ungesättigten Polyesterharzen ist derk bekannte auf geruchsintensive Restmonomere bzw. auf Nebenprodukte der Harzhärtung basierende, besonders bei der Möbelinnenbeschichtung lange Zeit störende Geruch des ausgehärteten Lackfilms. Darüber hinaus härten Beschichtungen aus ungesättigten Polyesterharzen auf Hölzern mit härtungsinhibierenden Inhaltsstoffen ungleichmäßig. So müssen z.B. exotische Hölzer, wie Palisander, Teak oder Makassar, vor der Polyesterharzbeschichtung mit einer isolierenden Grundierung versehen werden.

Aufgabe vorliegender Erfindung ist es deshalb, Beschichtungsmittel auf Basis ungesättigter Polyester für die dünnschichtige bzw. offenporige Holzbeschichtung bereitzustellen, die die oben gennanten Nachteile nicht aufweisen.

Aus der DE—C 2 221 335 sind Polyester bekannt, deren Alkoholkomponente $\beta$, $\gamma$-äthylenisch ungesättigte Äthergruppierungen enthält. Diese Polyester werden monomerenfrei im Gemisch mit Photoinitiatoren aufgetragen und mittels UV-Strahlung innerhalb weniger Sekunden zu völliger Klebfreiheit gehärtet. Werden die Photoinitiatoren durch übliche Peroxid-Katalysatoren ersetzt, erhält man Überzüge mit merklicher Klebrigkeit, die erst im Laufe einiger Stunden wieder verschwindet.

Aus der GB—A 1 076 319 ist es bekannt, Polyester mit endständig einkondensierten Polyalkylenglykoleinheiten als Emulgatoren für die Herstellung von Wasser-in-Öl-Emulsionen, basierend auf Mischungen aus ungesättigten (monomerhaltigen) Polyestern und/oder polymerisierbaren Monomeren und inerten organischen Lösungsmitteln, einzusetzen. Die erhaltenen Emulsionen können zur Herstellung von Schmiermitteln, hydraulischen Flüssigkeiten oder von Polymeren dienen.

Überraschenderweise wurde nun gefunden, daß Sperrmittelhaltige monomerfreie wäßrige Emulsionen eines Gemisches mindestens zweier $\alpha,\beta$-äthylenisch ungesättigter.

Polyester mit $\beta,\gamma$-äthylenisch ungesättigten Athergruppen, von denen der ein Polyester.

Polyalkyleneglykolreste mit Molekulargewichten von 250—2000 einkondensiert enthält, während der andere Polyester solche Gruppen nicht enthält, selbst, auf harzhaltigen exotischen Hölzern gleichmäßig und in relativ kurzer Zeit klebfrei zu dünnschichtigen bzw. offenporigen Überzügen gehärtet werden können.

Gegenstand der Erfindung sind daher monomerfreie wäßrige Emulsionen aus

A. 10—90, vorzugsweise 15—70 Gew.-% Mischungen $\alpha,\beta$-äthylenisch ungesättigter Polyester, die gegebenenfalls 0,001—0,1 Gew.-%, bezogen auf die Komponente A, Polymerisations inhibitoren oder Antioxidantien enthalten,

B. 9.95—83, vorzugsweise 29.95—78 Gew.-% Wasser,

C. 0,05—23 Gew.-% Sperrmittel und gegebenenfalls

D. bis zu 5 Gew.-% Verdickungsmittel,

wobei sich die Gewichtsprozente jeweils auf die Summe der Komponenten A, B, C und D beziehen, und die Polyestermischung A

a. 50—95, vorzugsweise 70—90 Gew.-%, bezogen auf die Summe von a und b, mindenstens eines $\alpha,\beta$-äthylenisch ungesättigten Polyesters, der pro 100 g Polyester a 0,2—0,8, vorzugsweise 0,3—0,7 Mol $\beta,\gamma$-äthylenisch ungesättigte Äthergruppen, aber keine einkondensierten Polyalkylenglykolreste mit Molekulargewichten von 250—2000 enthält, und

b. 5—50, vorzugsweise 10—30 Gew.-%, bezogen auf die Summe von a und b, mindenstens eines $\alpha,\beta$-äthylenisch ungesättigten Polyesters enthält, der zu 25—90, vorzugsweise 30—80 Gew.-%, bezogen auf b., aus einkondensierten Polyalkylenglykolresten eines Molekulargewichts von 250—2000, vorzugsweise 300—1000, besteht und pro 100 g Polyester b 0.04—0,5, vorzugs-

# O 003 337

weise 0,1—0,4, Mol $\beta,\gamma$-äthylenisch ungesättigte Äthergruppen enthält.

Ein weiterer Gegenstand der Erfindung ist ein Verfahren zur Herstellung von dünnschichtigen bzw. offenporigen Beschichtungen, wonach man die obige monomerfreie wäßrige Emulsion mit einem Härtungskatalysator versieht und in einer Naßfilmschichtdicke bis zu 200 $\mu$m, vorzugsweise bis 120 $\mu$m, auf Holz oder ein holzähnliches Substrat aufbringt, bei Temperaturen zwischen 20 und 150, vorzugsweise 40 und 100°C antrocknet und bei gleicher oder höherer Temperatur, d.h. also zwischen 20 und 180, vorzugsweise 40 und 160°C, oder mittels UV-Strahlung bis zur Stapelfähigkeit härtet.

"Monomerfrei" bedeutet erfindungsgemäß: frei von Monomeren, di mit den ungesättigten Polyestern a. und b. copolymerisierbar wären.

Das erfindungsgemäße Verfahren getattet durch das Fehlen verdunstender Monomerer eine angenehmere Anfertigung dünnschichtiger bzw. offenporiger Beschichtungen auf Holz oder holzähnlichen Stoffen. In Gegenwart des bei lufttrocknenden Polyesterbeschichtungsmitteln ungewöhnlichen Sperrmittelzusatzes entspricht die Aushärtezeit den Anforderungen der kurztaktigen Möbelfertigung, und die Lackfilme besitzen hervorragende Oberflächenqualitäten. Die Aushärtung erfolgt selbst auf exotischen Hölzern problem-los, und die praktisch geruchsfreien Überzugsmittel eignen sich hervorragend zur Innenbeschichtung von Möbeln.

Bevorzugte $\alpha,\beta$-äthylenisch ungesättigte Polyester a sind die Polykondensationsprodukte mindestens einer $\alpha,\beta$-äthylenisch ungesättigten Dicarbonsäure mit in der Regel 4 oder 5 C-Atomen oder deren esterbildende Derivate (z.B. Anhydride), gegebenenfalls in Abmischung mit bis zu 100 Mol-%, bezogen auf die ungesättigte Säurekomponente, mindestens einer aliphatischen gesättigten Dicarbonsäure mit 4—10 C-Atomen oder einer cycloaliphatischen oder aromatischen Dicarbonsäure mit 8—10 C-Atomen oder deren esterbildende Derivate (z.B. ihren Anhydriden), mit mindestens einer Hydroxyverbindung, vorzugsweise Polyhydroxyverbindung mit 2 bis 8 C-Atomen, deren nicht zur Polykondensation eingesetzten OH-Gruppen mindestens teilweise mit $\beta,\gamma$-ungesättigten Alkoholen veräthert sind, also Polyester, wie sie z.B. in der DE—B 1 024 654 beschrieben sind.

Die $\alpha,\beta$-äthylenisch ungesättigten Polyester b enthalten außer den genannten Komponenten der Polyester a Polyäthylenglykolreste eingebaut. Die Polyäthylenglykolreste können in an sich bekannter Weise über Polyäthylenglykole bei der Polyesterherstellung einkondensiert werden oder, wie in der GB—A 1 076 319 beschrieben ist, durch Anlagerung der entsprechenden Alkylenoxide an die OH- bzw. COOH-Gruppen einer Polyestervorstufe ankondensiert werden. Es sind jedoch auch Polyalkylenglykolcopolymerreste geeignet, z.B. Äthylenoxid-Propylenoxid-Mischpolymerketten mit Propylenoxidgehalten unter 50 Mol-%. Bevorzugte Polyalkylenglykole sind solche, bei denen die Sauerstoffatome durch mindestens zwei Kohlenstoffatome, insbesondere 2—4 Kohlenstoffatome, getrennt sind. Besonders bevorzugte Polyalkylenglykole sind Polyäthylenglykole.

Die Säurezahlen der Polyester sollen 1—40, vorzugsweise 2—30 und die OH-Zahlen 10—120, vorzugsweise 30—100 und die als Zahlenmittel bestimmten Molekulargewichte 300 bis 5000, vorzugsweise 500—2000, betragen.

Um die erfindungsgemäßen Überzugsmittel vor unerwünschter vorzeitiger Polymerisation zu bewahren, empfiehlt es sich, bereits bei der Herstellung der ungesättigten Polyester 0,001—0,1 Gew.-%, bezogen auf die Komponente A, Polymerisationsinhibitoren oder Antioxidantien zuzusetzen.

Bevorzugte Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1—6 C-Atomen enthalten, Amine, vorzugsweise sekundäre Arylamine und ihre Derivate, Chinone, Kupfersalze organischer Säuren, Anlagerungsverbindungen von Kupfer-(I)-halogeniden an Phosphite; Verbindungen der genannten Art sind z.B. 4,4'-Bis-(2,6-di-tert.-butylphenol), 1,3,5-Trimethyl-2,4,6-tris(3,5-di-tert.-butyl-4-hydroxybenzyl)-benzol, 4,4'-Butyliden-bis-(6-tert.-butyl-m-kresol), 3,5-Di-tert.-butyl-4-hydroxy-benzyl-phosphonsäurediäthylester, N,N'-Bis-($\beta$-naphthyl)-p-phenylendiamin, N,N'-Bis-(1-methylheptyl)-p-phenylendiamin, N,N'-Bis-(1-methylheptyl)-p-phenylendiamin, Phenyl-$\beta$-naphthyl-amin, 4,4'-Bis-($\alpha,\alpha$-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, Toluhydrochinon, p-tert.-Butylbrenzcatechin, Chloranil, Naphthochinon, Kupfernaphthenat, Kupferoctoat, Cu(I)Cl / Triphenylphosphit, Cu(I)Cl / Trimethylphosphit, Cu(I)Cl / Trischloräthyl-phosphit, p-Nitrosodimethylanilin. Weitere geeignete Stabilisatoren sind in "Methoden der organischen Chemie" (Houben-Weyl), 4. Auflage. Band XIV/1, S. 433—452, 756 Georg-Thieme-Verlag, Stuttgart, 1961, beschrieben. Sehr gut geeignet ist z.B. p-Benzochinon in einer Konzentration von 0,01 bzw. 0,05 Gew.-%, bezogen auf die Komponente A.

Geeignete Sperrmittel C sind Wachse und vorzugsweise Paraffine mit einem Schmelzpunkt zwischen 35 und 100, vorzugsweise 40—80°C. Sie werden den erfindungsgemäßen Emulsionen vorzugsweise in Form wäßriger Dispersionen zugesetzt und verhindern die Inhibierung der Polymerisation durch den Sauerstoff der Luft.

Verdickungsmittel D, erforderlich besonders bei dünnflüssigen Öl-in-Wasser-Emulsionen zur Erzeugung der benötigten Verarbeitungsviskosität der erfindungsgemäßen Überzugsmittel, sind in Karsten, Lackrohstofftabellen 6. Auflage 1976, Abs. 42.28 "Verdickungsmittel" aufgeführt; bevorzugt sind Cellulosederivate, z.B. Methylcellulose und Verdicker auf Urethanbasis sowie spez. Montmorillonite. Sie können sowohl dem Polyestergemisch oder dem Wasser vor dem Emulgieren zugesetzt als auch nachträglich in die fertige Emulsion zur Nachdickung eingerührt werden.

Die Herstellung der Emulsionen für die erfindungsgemäßen Beschichtungsmittel kann durch Einrühren des Wassers B in das Polyestergemisch A, z.B. durch einfaches Rühren oder mittels Dissolver, erfolgen. Zur Ausbildung einer feinteiligeren Emulsion, d.h. zur besseren Einbringung der Scherkräfte, ist portionsweiser Wasserzusatz bei Temperaturen unter 30°C vorteilhaft. Es werden sowohl Wasser-in-Öl- als auch Öl-in-Wasser-Emulsionen gebildet.

Die Härtung kann auf an sich bekannte Weise mit Hilfe von polymerisationsauslösenden Radikalbildnern erfolgen (vgl. z.B. Wagner/Sarx, lackkunstharze, Kapitel: Ungesättigte Polyesterharze, 5. Aufl., Verlag Karl Hanser, Stuttgart, 1971). Bevorzugt werden wasserlösliche Peroxide, wie Wasserstoffperoxid und Acetylacetonperoxid; Methyläthylketonhydroperoxid, Cyclohexanonperoxid oder die wäßrigen Emulsionen der nicht-wasserlöslichen Initiatoren eingesetzt. Bevorzugte Beschleuniger sind z.B. die Schwermetallsalze von Carbonsäuren oder die Chelate dieser Metalle wie die Acetate, Naphthenate oder Acetylacetonate von Kobalt, Mangan oder Vanadium. Auch die Beschleuniger können entweder, falls sie wasserlöslich sind, in Form ihrer wäßrigen Lösungen, andernfalls als wäßrige Emulsionen zugesetzt werden.

Übliche Mengen, d.h. 0,5—5 Gew.-% Peroxid, 0,01—0,2 Gew.-% Sikkativmetall, bezogen auf die Summe der Komponenten A und B, gewährleisten in der Regel eine ausgezeichnete Härtung.

Zum Schutz von lichtempfindlichen Untergründen, z.B. hellen Hölzern, können den Überzugsmassen geringere Mengen der üblichen UV-Absorber zugesetzt werden, z.B. 2-Hydroxy-4-methoxybenzophenon, oder die üblicherweise verwendeten Zimtsäure- und Benzotriazinderivate.

Übliche Zuschlags- und Farbstoffe, Konservierungs-, Mattierungs- und Verlaufsmittel sowie Pigmente können zur Erzielung spezieller Effekte ebenfalls zugesetzt werden, sofern, sie die Emulsionsstabilität und die Polymerisation nicht wesentlich beeinflussen.

Die erfindungsgemäßen Überzugsmittel eignen sich hervorragend zur Verarbeitung auf den herkömmlichen mit Gießmaschinen ausgerüsteten Lackierstraßen, z.B. nach dem Aktivgrundverfahren (vgl. DE—B 1 025 302), und infolge langer offener Verarbeitungszeiten auch zum Gießen in katalysierter und sikkativierter Form.

Weiter lassen sich die erfindungsgemäßen Überzugsmittel auch durch Walzen und Spritzen nach den bekannten Methoden (Wagner / Sarx, Lackkunstharze, 5. Auflage, Verlag Karl Hanser, 1971 S. 140, 141 und Weigel, Katalytische Lackhärtung und ihre Rohstoffe, Wissenschaftliche Verlagsgesellschaft, 1962, S. 192—202) auftragen.

Die nachfolgenden Beispiele sollen die Erfindung erläutern und anhand eines Vergleiches mit einem styrolhaltigen ungesättigten Polyesterharz die überlegene Aushärtung der erfindungsgemäßen Überzugsmittel auf exotischen Hölzern zeigen.

BEISPIELE

Die Polyester nachstehender Zusammensetzung (in Molen) und Kennzahlen wurden in den erfindungsgemäßen Emulsionen verwendet.

| Polyester a | $a_1$ | $a_2$ | $a_3$ |
|---|---|---|---|
| Maleinsäureanhydrid | 1,0 | 1,0 | 0,7 |
| Adipinsäure | — | — | 0,3 |
| Propandiol-1,2 | 0,55 | 0,55 | 0,95 |
| Benzylalkohol | — | 0,5 | — |
| Trimethylolpropandiallyläther | 1,0 | 0,5 | 0,4 |
| Säurezahl | 22 | 22 | 16 |
| Viskosität [mPa.$s$], gemessen 70 Gew.-% in Styrol bei 20°C | 100 | 315 | 350 |

| Polyester b | $b_1$ | $b_2$ | $b_3$ |
|---|---|---|---|
| Maleinsäureanhydrid | 1,0 | 1,0 | 1,0 |
| Diäthylenglykol | — | 0,5 | — |
| Polyäthylenglykol (MG 400) | 0,79 | 0,46 | — |
| Polyäthylenglykol (MG 1200) | — | — | 0,8 |
| Trimethylolpropandiallyläther | 0,4 | 0,4 | 0,4 |
| Säurezahl | 27 | 19 | 18 |
| Viskosität [mPa.$s$], gemessen 70 Gew.-% in Styrol bei 20°C | 560 | 270 | 50 |

Zusammensetzung und Herstellung der erfindungsgemäßen Emulsionen (in Gewichtsteilen)

| Beispiel | 1 | 2 | 3 | 4 | 5 | 6 |
|---|---|---|---|---|---|---|
| Polyester | | | | | | |
| a 1 | 80 | 80 | 80 | 80 | | |
| a 2 | | | | | 80 | |
| a 3 | | | | | | 70 |
| b 1 | 20 | 20 | | | 20 | 30 |
| b 2 | | | 20 | | | |
| b 3 | | | | 20 | | |
| Wasser | 100 | 140 | 100 | 100 | 140 | 140 |
| Verdickungsmittel | | 5 | | 5 | 6 | 3 |
| Sperrmittel-Emulsion | 4 | 4 | 4 | 4 | 4 | 4 |

Zur Herstellung der Emulsion wurde das Wasser außer bei Beispiel 2 nach Zusatz des Verdichungsmittels in 3 Portionen bei 25°C mit der Hand eingerührt und die Sperrmittelemulsion zugesetzt. Man erhielt Wasser-in-Öl-Emulsionen.

Beispiel 2 wurde mittels Dissolver mit 70 Gew.-% Festkörper bei 8000 U/min. bei Temperaturen bis max. 45°C emulgiert und mit dem Restwasser bei 1000 U/min. verdünnt. Man erhielt eine Öl-in-Wasser-Emulsion. Das Verdickungsmittel wurde unmittelbar vor dem Gießen mit der Gießmaschine zugesetzt.

Verdickungsmittel: Borchigel L 75® (Karsten, Lackrohstofftabellen, 6. Auflage, S. 554).

Sperrmittel-Emulsion: 10 Gew.-T1. Paraffin (Fp. 57—60°C), emulgiert in 90 Gew.-% 6 Gew.-%iger wäßriger Polyvinylalkohollösung (Polyvinylalkohol; Verseifungszahl 140, Viskosität: 25[mPa·s] gemessen als 4 gew.-%ige wäßrige Lösung bei 20°C)

80 g/m² Emulsion, katalysiert mit 3 Gew.-T1. $H_2O_2$ (35 gew.-%ig) und sikkativiert mit 2 Gew.-T1. wäßriger Kobaltacetatlösung (≙ 5 Gew.-% Metall), bezogen auf 100 Gew.-T1. Emulsion, wurden auf grundierte Musterbretter, Eiche funiert, aufgezogen bzw. aufgegossen. Als Grundierung diente nachstehender Walzgrund: 70 Gew.-T1. einer 25 gew.-%igen Lösung alkohollöslicher Nitrocellulose (mittelviskos) in Isopropanol / Äthylglykol (2 : 1 Gew.-Teile) und 30 Gew.-T1. einer 40 gew.-%igen Lösung eines Cyclohexanon-Formaldehydharzes. Erweichungspunkt 75—90°C (DIN 53180) in Isopropanol.

Die Trocknung der aufgetragenen Lackfilme erfolgte bei 50°C und 2 m/s Luftbewegung im Flachtunnel.

Trocknung

| Beispiel | 1 | 2 | 3 | 4 | 5 | 6 |
|---|---|---|---|---|---|---|
| Trockenzeit min. | 20 | 23 | 24 | 32 | 25 | 22 |
| Porenfluß | gut | sehr gut | gut | befrie- digend | gut | gut |
| Kratzfestigkeit | | | alle Lackfilme kratzfest | | | |
| Verlauf | sehr gut | sehr gut | sehr gut | gut | gut | gut |

Nachstehender Vergleich verdeutlicht die überlegene Aushärtung der erfindungsgemäßen Beschichtungsmittel auf Holz mit härtungsinhibierenden Inhaltsstoffen. Als Vergleich wurde der Lack eines handelsüblichen Polyesterharzes aus 0,7 Mol Maleinsäureanhydrid, 0,3 Mol Phthalsäureanhydrid, 1,05 Mol Propandiol-1,2, 50 Gew.-%ig gelöst in Styrol, katalysiert, sikkativiert und sperrmittelversetzt aufgezogen.

Musterbrett:    Teak, Aufzug: 150 g/m²

| | erfindungsgem. Beispiel 2 | Vergleich |
|---|---|---|
| Trocken bei 30°C | 1 Std. | nach 24 Std. in den Holzporen noch flüssig |

**Patentansprüche**

1. Monomerfreie wäßrige Emulsionen aus
A. 10—90 Gew.-% Mischungen $\alpha,\beta$-äthylenisch ungesättigter Polyester, die gegebenenfalls 0,001—0,1 Gew.-%, bezogen auf die Komponente A, Polymerisationsinhibitoren oder Antioxidantien enthalten,
B. 9,95—83 Gew.-% Wasser,
C. 0,05-2 Gew.-% Sperrmittel und gegebenenfalls
D. bis zu 5 Gew.-% Verdickungsmittel,
wobei sich die Gewichtsprozente jeweils auf die Summe der Komponenten A, B, C und D beziehen und die Polyestermischung A
a. 50—95 Gew.-%, bezogen auf die Summe von a und b, mindestens eines $\alpha,\beta$-äthylenisch ungesättigten Polyesters, der pro 100 g Polyester a 0,2—0,8 Mol $\beta,\gamma$-äthylenisch ungesättigte Äthergruppen, aber keine einkondensierten Polyalkylenglykolreste mit Molekulargewichten von 250—2000 enthält, und
b. 5—50 Gew.-%, bezogen auf die Summe von a und b, mindestens eines $\alpha,\beta$-äthylenisch ungesättigten Polyesters enthält, der zu 25—90 Gew.-%, bezogen auf b., aus einkondensierten Polyalkylenglykolresten eines Molekulargewichts von 250—2000 besteht und pro 100 g Polyester b 0,04—0,5 Mol $\beta,\gamma$-äthylenisch ungesättigte Äthergruppen enthält.
2. Verfahren zur Herstellung von offenporigen Beschichtungen, wonach man die monomerfreie wäßrige Emulsion nach Anspruch 1 mit einem Härtungskatalysator versieht und in einer Naßfilmschichtdicke bis zu 200 $\mu$m auf Holz oder ein holzähnliches Substrat aufbringt, bei Temperaturen zwischen 20 und 150°C antrocknet und bei gleicher oder höherer Temperatur, d.h. also zwischen 20 und 180°C, oder mittels UV-Strahlung bis zur Stapelfähigkeit härtet.

**Claims**

1. Monomer-free aqueous emulsions comprising
A. 10 to 90 % by weight of mixtures of $\alpha,\beta$-ethylenically unsaturated polyesters, which optionally contain 0,001—0,1 % by weight, relative to component A, of polymerisation inhibitors or antioxidants,
B. 9.95 to 83 % by weight of water,
C. 0.05 to 2 % by weight of sealing agents and, optionally,
D. up to 5 % by weight of thickeners,
the percentages by weight being based in each case on the sum of components A, B, C and D and the polyester mixture A containing
a. 50 to 95 % by weight, based on the sum of a and b, of at least one $\alpha,\beta$-ethylenically unsaturated polyester which contains per 100 g of polyester a from 0.2 to 0.8 moles of $\beta,\gamma$-ethylenically un-

saturated ether groups, but no co-condensed polyalkylene glycol residues having molecular weights of 250—2,000, and

b. 5 to 50 % by weight, based on the sum of a and b, of at least one $\alpha,\beta$-ethylenically unsaturated polyester of which from 25 to 90 % by weight, based on b, consists of co-condensed polyalkylene glycol residues having a molecular weight of from 250 to 2000 and which contains per 100 g of polyester b from 0.04 to 0.5 mole of $\beta,\gamma$-ethylenically unsaturated ether groups.

2. A process for the production of open-core coatings, wherein the monomer-free aqueous emulsion according to Claim 1 is provided with a hardening catalyst, and is applied to wood or a wood-like substrate in a wet film layer thickness of up to 200 $\mu$m, dried at a temperature of from 20 to 150°C and hardened at the same temperature or at a higher temperature, i.e. at a temperature of from 20 to 180°C, or by UV-irradiation until the substrate thus coated can be stacked.


**Revendications**

1. Emulsions aqueuses exemptes de monomère, comprenant

A. 10 à 90 % en poids de mélanges de polyesters $\alpha,\beta$-éthyléniques qui contiennent éventuellement 0,001—0,1 % en poids, par rapport au composant A, d'inhibiteurs de polymérisation ou d'antioxydants,

B. 9,95 à 83 % en poids d'eau,

C. 0,05 à 2 % en poids d'agent protecteur, et éventuellement,

D. jusqu'à 5 % en poids d'agent épaississant,

les parties en poids étant rapportées chaque fois à la somme des composants A, B, C et D, et le mélange de polyesters A contenant:

a. 50 à 95 % en poids, par rapport à la somme (a) + (b), d'au moins un polyester $\alpha,\beta$-éthylénique, qui contient pour 100 g de polyester (a), 0,2 à 0,8 mole de groupes éther $\beta,\gamma$-éthylénique, mais pas de restes polyéthylèneglycols condensés et ayant des poids moléculaires de 250 à 2000, et

b. 5 à 50 % en poids, par rapport á la somme (a) + (b), d'au moins un polyester, $\alpha,\beta$-éthylénique, qui consiste pour 25 à 90% en poids, par rapport à (b), en restes polyéthylèneglycols condensés d'un poids moléculaire de 250—2000 et qui contient pour 100 g de polyester (b), 0,04 à 0,5 mole de groupes éther $\beta,\gamma$-éthylénique.

2. Procédé pour la préparation de revêtements à pores ouverts, caractérisé en ce que l'on munit l'émulsion aqueuse exempte de monomère selon la revendication 1, d'un catalyseur de durcissement et on l'applique sur du bois ou un substrat analogue au bois à une épaisseur de couche de film humide allant jusqu'à 200 $\mu$, on sèche à des températures de 20 à 150°C et on durcit à des températures égales ou supérieures, c'est-à-dire donc entre 20 et 180°C, ou bien par des rayonnements ultraviolets, jusqu'à aptitude à l'empilement.